# EUROPEAN PATENT APPLICATION

(11) **EP 4 395 403 A1**
(43) Date of publication of application: **03.07.2024**
(21) Application number: 22875016.2
(22) Date of filing: 28.09.2022
(51) Int. Cl.: H04W 24/02, H04W 24/08, H04W 24/10, H04W 72/12

(54) **COMMUNICATION METHOD AND APPARATUS**

(30) Priority: 30.09.2021 CN 202111165893
(71) Applicant: Huawei Technologies Co., Ltd., Shenzhen, Guangdong 518129 (CN)
(72) Inventor: YUAN, Shitong, Shenzhen, Guangdong 518129 (CN); LIU, Fengwei, Shenzhen, Guangdong 518129 (CN); SONG, Xinghua, Shenzhen, Guangdong 518129 (CN)
(74) Representative: Gill Jennings & Every LLP
(86) International application number: PCT/CN2022/122237
(87) International publication number: WO 2023/051633

(57) **Abstract**

A communication method and an apparatus are provided, to improve communication quality. The communication method includes: A first node receives a first message from a second node. The first message indicates a first ratio corresponding to a first downlink reference signal. The first ratio is a power ratio that is between data and a downlink reference signal and that is obtained after downlink transmission power adjustment performed by a parent node. The first node sends a second message to the parent node. The second message includes a first measurement result. The first measurement result is determined based on the first ratio, and the first measurement result is determined based on the first downlink reference signal.

## Description

### CROSS-REFERENCE TO RELATED APPLICATIONS

This application claims priority to Chinese Patent Application No. 202111165893.1, filed with the China National Intellectual Property Administration on September 30, 2021 and entitled "COMMUNICATION METHOD AND APPARATUS", which is incorporated herein by reference in its entirety.

### TECHNICAL FIELD

Embodiments of this application relate to the fields of communication and the like, and in particular, to a communication method and an apparatus.

### BACKGROUND

With continuous development of mobile communication technologies, spectrum resources become increasingly insufficient. To improve spectrum utilization, base stations will be deployed more densely in the future. In addition, dense deployment may further avoid coverage holes. In a conventional cellular network architecture, a base station establishes a connection to a core network through an optical fiber. However, deployment costs of optical fibers are very high in many scenarios. A wireless relay node (relay node, RN) establishes a connection to the core network through a wireless backhaul link, to reduce a part of optical fiber deployment costs.

Usually, a relay node establishes a wireless backhaul link to one or more parent nodes, and accesses the core network through the parent node. In addition, the relay node may provide a service for a plurality of child nodes. A link for communicating with the parent node is usually referred to as a backhaul link, and a link for communicating with the child node or UE is usually referred to as an access link. Resource multiplexing is performed on the access link and the backhaul link in time division, space division, or frequency division mode.

In a space division multiplexing scenario, the backhaul link and the access link may operate at a same moment, and the relay node may simultaneously receive a downlink signal sent by the parent node on the backhaul link and an uplink signal sent by the child node on the access link, to improve spectrum efficiency. Certainly, the relay node may send signals simultaneously.

In a space division receiving scenario, how to improve communication quality is a technical problem that needs to be resolved.

### SUMMARY

Embodiments of this application provide a communication method and apparatus, to improve communication quality.

According to a first aspect, a communication method is provided. The method may be performed by a first node, or by a component used in the first node, for example, a chip or a processor. The following uses an example in which the method is performed by the first node for description. First, a first node receives a first message from a second node. The first message indicates a first ratio corresponding to a first downlink reference signal. The first ratio is a power ratio that is between data and a downlink reference signal and that is obtained after downlink transmission power adjustment is performed by a parent node. Then, the first node sends a second message to the parent node. The second message includes a first measurement result, the first measurement result is determined based on the first ratio, and the first measurement result is determined based on the first downlink reference signal.

In this application, the power ratio that is between the data and the downlink reference signal and that is obtained after the downlink transmission power adjustment (or that is measured in a space division mode) is configured for the first node, so that the first node reports, to a parent node, a measurement result obtained based on the power ratio that is between the data and the downlink reference signal and that is obtained after the downlink transmission power adjustment (or that is measured in the space division mode). In this case, the parent node can obtain a measurement result (for example, a CQI measurement result) during measurement in the space division mode, so that the parent node determines a transmission parameter for downlink transmission scheduling in a space division slot (after a downlink transmission power is adjusted), and communication performance can be improved.

The second node may be the same as or different from the parent node. When the second node is different from the parent node, optionally, the second node may be a parent node of the parent node that receives the second message.

In a possible implementation, when the second node is the parent node, the first message further indicates the downlink transmission power adjustment amount used by the parent node and a corresponding first beam. An existing downlink power control response message carries information about the first ratio. An existing message (which is, for example, referred to as a power control response message) is used as the first message, so that signaling exchange can be reduced. Certainly, the first message may be a message other than the power control response message, for example, information for configuring a downlink resource.

In a possible implementation, when the second node is a donor node, the first message includes downlink reference signal resource configuration information. Existing downlink reference signal resource configuration information carries the information about the first ratio. The existing message is used as the first message, so that the signaling exchange can be reduced.

In a possible implementation, the first node may first receive a third message from the parent node. The third message indicates a downlink transmission power adjustment amount used by the parent node and a corresponding first beam. Then, the second message is sent to the parent node.

In a possible implementation, the second message further includes a second measurement result. The second measurement result is determined based on a second ratio, and the second measurement result is determined based on the first downlink reference signal. The second ratio is a power ratio that is between data and a downlink reference signal and that is used before downlink transmission power adjustment is not performed by the parent node. The first node reports, to the parent node, a measurement result obtained based on the power ratio that is between the data and the downlink reference signal and that is used before the downlink transmission power adjustment (or that is measured in a time division mode) is not performed. In this case, the parent node can obtain a measurement result (for example, a CQI measurement result) during measurement in the time division mode, so that the parent node determines a transmission parameter for downlink transmission scheduling in a time division slot (after the downlink transmission power is adjusted), and communication performance can be improved.

In a possible implementation, if a beam for measuring the first downlink reference signal is a beam associated with the first beam, it is determined to report the first measurement result corresponding to the beam for measuring the first downlink reference signal, or it is determined to report the first measurement result and the second measurement result corresponding to the beam for measuring the first downlink reference signal. If a beam for measuring a downlink reference signal is not a beam associated with the first beam, it is determined to report the second measurement result corresponding to the beam for measuring the downlink reference signal. The first beam is a beam on which the parent node allows to perform downlink transmission power adjustment.

In a possible implementation, the first node may send a fourth message to the parent node. The fourth message indicates a downlink transmission power adjustment amount desired by the first node and a second beam corresponding to the desired downlink transmission power adjustment amount. Then, the first node receives the first message from the second node.

According to a second aspect, a communication method is provided. The method may be performed by a second node, or by a component used in the second node, for example, a chip or a processor. The following uses an example in which the method is performed by the first node for description. First, a second node sends a first message to a first node. The first message indicates a first ratio corresponding to a first downlink reference signal. The first ratio is a power ratio that is between data and a downlink reference signal and that is obtained after downlink transmission power adjustment is performed by the second node. The second node receives a second message from the first node. The second message includes a first measurement result. The first measurement result is determined based on the first ratio, and the first measurement result is determined based on the first downlink reference signal.

In this application, the second node configures the power ratio that is between the data and the downlink reference signal and that is obtained after the downlink transmission power adjustment (or that is measured in a space division mode) for the first node, so that the first node reports, to the second node, a measurement result obtained based on the power ratio that is between the data and the downlink reference signal and that is obtained after the downlink transmission power adjustment (or that is measured in the space division mode). In this case, the second node can obtain a measurement result (for example, a CQI measurement result) during measurement in the space division mode, so that the second node determines a transmission parameter for downlink transmission scheduling in a space division slot (after a downlink transmission power is adjusted), and communication performance can be improved.

In a possible implementation, when the second node is a parent node, the first message further indicates a downlink transmission power adjustment amount used by the second node and a corresponding first beam. An existing downlink power control response message carries information about the first ratio. An existing message is used as the first message, so that signaling exchange can be reduced.

In a possible implementation, when the second node is a donor node, the first message includes downlink reference signal resource configuration information. Existing downlink reference signal resource configuration information carries the information about the first ratio. The existing message is used as the first message, so that the signaling exchange can be reduced.

In a possible implementation, the second node may first send a third message to the first node. The third message indicates the downlink transmission power adjustment amount used by the second node and a corresponding first beam. Then, the second message from the first node is received.

In a possible implementation, the second message further includes a second measurement result. The second measurement result is determined based on a second ratio, and the second measurement result is determined based on the first downlink reference signal. The second ratio is a power ratio that is between data and a downlink reference signal and that is used before downlink transmission power adjustment is not performed by the second node. The first node reports, to the second node, a measurement result obtained based on the power ratio that is between the data and the downlink reference signal and that is used before the downlink transmission power adjustment (or that is measured in a time division mode) is not performed. In this case, the second node can obtain a measurement result (for example, a CQI measurement result) during measurement in the time division mode, so that the second node determines a transmission parameter for downlink transmission scheduling in a time division slot (after the downlink transmission power is adjusted), and communication performance can be improved.

In a possible implementation, the second node may first receive a fourth message from the first node. The fourth message indicates a downlink transmission power adjustment amount desired by the first node and a second beam corresponding to the desired downlink transmission power adjustment amount. Then, the first message is sent to the first node.

According to a third aspect, a communication apparatus is provided. The apparatus has a function of implementing any one of the first aspect or the possible implementations in the first aspect, or a function of implementing any one of the second aspect and the possible implementations in the second aspect. The function may be implemented by hardware, or may be implemented by hardware by executing corresponding software. The hardware or software includes one or more functional modules corresponding to the foregoing function.

According to a fourth aspect, a communication apparatus is provided. The communication apparatus includes a processor. Optionally, the communication apparatus further includes a memory. The processor is coupled to the memory. The memory is configured to store a computer program or instructions. The processor is configured to execute a part or all of the computer program or the instructions in the memory. When the part or all of the computer program or the instructions are executed, the processor is configured to implement a function of the first node in the method in any one of the first aspect and the possible implementations in the first aspect, or implement a function of the second node in any one of the second aspect and the possible implementations in the second aspect.

In a possible implementation, the apparatus may further include a transceiver, and the transceiver is configured to transmit a signal processed by the processor, or receive a signal input into the processor. The transceiver may perform a transmit action or a receiving action performed by the first node in any one of the first aspect and the possible implementations in the first aspect, or perform a transmitting action or a receiving action performed by the second node in any one of the second aspect and the possible implementations in the second aspect.

According to a fifth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store a computer program or instructions. The processor is configured to execute a part or all of the computer program or the instructions in the memory. When the part or all of the computer program or the instructions are executed, the processor is configured to implement a function of the first node in the method in any one of the first aspect and the possible implementations in the first aspect, or implement a function of the second node in any one of the second aspect and the possible implementations in the second aspect.

In a possible implementation, the chip system may further include an input/output interface (which may also be referred to as a communication interface). The input/output interface is configured to output a signal processed by the processor, or receive a signal input to the processor. The input/output interface may perform a transmitting action or a receiving action performed by the first node in any one of the first aspect and the possible implementations in the first aspect, or perform a transmitting action or a receiving action performed by the second node in any one of the second aspect and the possible implementations in the second aspect. Specifically, the output interface performs a transmitting action, and the input interface performs a receiving action.

In a possible implementation, the chip system may include a chip, or may include the chip and another discrete device.

According to a sixth aspect, a computer-readable storage medium is provided, configured to store a computer program. The computer program includes instructions for implementing the function in any one of the first aspect and the possible implementations in the first aspect, or instructions for implementing the function in any one of the second aspect and the possible implementations in the second aspect.

Alternatively, a computer-readable storage medium is configured to store a computer program. When the computer program is executed by a computer, the computer is enabled to perform the method performed by the first node in any one of the first aspect and the possible implementations of the first aspect, or perform the method performed by the second node in any one of the second aspect and the possible implementations in the second aspect.

According to a seventh aspect, a computer program product is provided. The computer program product includes computer program code. When the computer program code is run on a computer, the computer is enabled to perform the method performed by the first node in any one of the first aspect and the possible implementations of the first aspect, or perform the method performed by the second node in any one of the second aspect and the possible implementations in the second aspect.

According to an eighth aspect, a communication system is provided. The communication system includes the first node for performing the method in any one of the first aspect and the possible implementations of the first aspect and the second node for performing the method in any one of the second aspect and the possible implementations of the second aspect.

For technical effects in the third aspect to the eighth aspect, refer to the descriptions in the first aspect and the second aspect. Details are not repeated herein.

### BRIEF DESCRIPTION OF DRAWINGS

FIG. 1 is a schematic diagram of an architecture of a communication system according to an embodiment of this application;
FIG. 2a is a schematic diagram of an architecture of a communication system according to an embodiment of this application;
FIG. 2b is an internal schematic diagram of a relay node according to an embodiment of this application;
FIG. 3 is a schematic diagram of a space division receiving scenario according to an embodiment of this application;
FIG. 4 is a flowchart of a communication method according to an embodiment of this application;
FIG. 5 is a flowchart of a communication method according to an embodiment of this application;
FIG. 6 is a flowchart of a communication method according to an embodiment of this application;
FIG. 7 is a flowchart of a communication method according to an embodiment of this application;
FIG. 8 is a schematic diagram of arrival time according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

For ease of understanding embodiments of this application, the following describes a part of terms in embodiments of this application, to help a person skilled in the art have a better understanding.

### 1. Beam:

The beam is a communication resource. The beam may be a wide beam, a narrow beam, or another type of beam. A technology for forming the beam may be a beam forming technology or another technical means. The beam forming technology may be specifically a digital beam forming technology, an analog beam forming technology, or a hybrid digital/analog beam forming technology. Different beams may be considered as different resources. Same information or different information may be sent by different beams.

Optionally, a plurality of beams having same or similar communication features may be considered as one beam. One beam may correspond to one or more antenna ports, and is for transmitting a data channel, a control channel, a sounding signal, and the like. For example, a transmit beam may refer to signal strength distribution formed in different directions in space after a signal is transmitted through an antenna, and a receive beam may refer to signal strength distribution in different directions in space of a radio signal received from an antenna. It may be understood that one or more antenna ports forming one beam may also be considered as one antenna port set.

When a low frequency band or an intermediate frequency band is used, signals may be sent in an omnidirectional manner or sent at a wide angle. However, when a high frequency band is used, because of a small carrier wavelength of a high frequency communication system, antenna arrays including a plurality of antenna elements may be disposed at a transmit end and a receive end, and the transmit end sends a signal based on a specific beam forming weight, so that the sent signal forms a beam having spatial directivity. In addition, the receive end receives the signal through the antenna array based on a specific beam forming weight, so that a receive power of the signal at the receive end can be increased, and a path loss can be avoided.

### 2. Quasi co-location (quasi co-location, QCL):

The QCL indicates that a plurality of resources have one or more same or similar communication features. For a plurality of resources having a QCL relationship, a same or similar communication configuration may be used. For example, if two antenna ports have a QCL relationship, a channel large-scale characteristic of transmitting one symbol by one port may be inferred from a channel large-scale characteristic of transmitting one symbol by the other port. The large-scale characteristic may include delay spread, an average delay, Doppler spread, Doppler frequency shift, an average gain, a receive parameter, a receive beam number of a terminal device, transmit/receive channel correlation, an angle of arrival, spatial correlation of a receiver antenna, a dominant angle of arrival (angle of arrival, AoA), an average angle of arrival, AoA spread, and the like.

During application, a co-location indication may indicate whether at least two groups of antenna ports have a QCL relationship. That the co-location indication indicates whether the at least two groups of antenna ports have the QCL relationship may be understood as that the co-location indication indicates whether channel state information-reference signals (CSI-RSs) sent by the at least two groups of antenna ports are from a same transmission point, or the co-location indication indicates whether channel state information-reference signals (CSI-RSs) sent by the at least two groups of antenna ports are from a same beam group.

### 3. Transmission configuration indicator (transmission configuration indicator, TCI):

The TCI is a field that is in downlink control information (downlink control information, DCI) and that indicates a QCL relationship between antenna ports of a physical downlink shared channel (physical downlink shared channel, PDSCH).

The TCI may be configured by a higher layer, such as a radio resource control (radio resource control, RRC) layer. In configuration signaling, the TCI may be referred to as a TCI state (TCI state), and the TCI state is an information structure, including beam-related information. After the TCI is configured by the RRC layer, a media (media) access control (media access control, MAC) control element (control element, CE) (MAC-CE) may be sent by a base station to activate one or more TCI states. The base station may further send downlink control information (downlink control information, DCI) to indicate one of a plurality of activated TCI states.

A higher layer in a protocol may configure a QCL by using the TCI state. A parameter of the TCI state may be for configuring a QCL relationship between one or two downlink reference signals and a demodulation reference signal (demodulation reference signal, DMRS) of the PDSCH. The TCI may include one or two QCL relationships. The QCL may represent a consistency relationship between a signal/channel that is currently to be received (or sent) by a terminal device and a previously known reference signal. Therefore, if there is a QCL relationship, the terminal device may inherit a parameter of a previously received (or sent) reference signal, to receive (or send) a to-be-received signal/channel.

During application, if the TCI state includes information with an identifier of QCL Type-D, the TCI state may indicate a beam. If the TCI state includes information with an identifier of QCL Type-A, QCL Type-B, or QCL Type-C, the TCI state may indicate information (excluding space domain information) such as a time domain offset and a frequency domain offset, and is generally for assisting the terminal device in data receiving and demodulation. During implementation, it may be considered that when two TCI state configurations use a same source reference signal of the QCL Type-D, the two TCI states have a QCL relationship, or it may be considered that a same beam is used.

4. Reference signal (reference signal, RS): According to a long term evolution LTE/NR protocol, at a physical layer, uplink communication includes transmission of an uplink physical channel and an uplink signal. The uplink physical channel includes a random access channel (physical random access channel, PRACH), an uplink control channel (physical uplink control channel, PUCCH), an uplink data channel (physical uplink shared channel, PUSCH), and the like. The uplink signal includes a channel sounding reference signal SRS, a physical uplink control channel demodulation reference signal (PUCCH demodulation reference signal, PUCCH-DMRS), a physical uplink shared channel demodulation reference signal PUSCH-DMRS, an uplink phase tracking reference signal (phase tracking reference signal, PTRS), an uplink positioning reference signal (uplink positioning RS), and the like. Downlink communication includes transmission of a physical downlink channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, which is referred to as PSS for short)/secondary synchronization signal (secondary synchronization signal, SSS), a physical downlink control channel demodulation reference signal PDCCH-DMRS, a physical downlink shared channel demodulation reference signal PDSCH-DMRS, a phase tracking reference signal PTRS, a channel state information reference signal (channel state information reference signal, CSI-RS), a cell signal (Cell reference signal, CRS) (not available in NR), a fine synchronization signal (time/frequency tracking reference signal, TRS) (not available inLTE), LTE/NR positioning reference signal (positioning RS), and the like.

### 5. Transmission timing:

Case 1, Case 6, and Case 7 are names discussed in a standard conference.

Case 1 timing: Timing used when an IAB-MT and DU are in a time division multiplexing mode, and in this case, a timing scheme of the MT is essentially the same as that of common UE.

Downlink timing: Downlink transmission timing of an IAB node and downlink transmission timing of an IAB donor node are aligned.

Uplink timing: Uplink transmission timing of the IAB node, which is the same as that of another UE, obtains the uplink timing in a manner specified in a protocol, for example, controls signaling based on TA sent by a base station.

Case 7 timing: A timing solution used by an IAB to perform space division reception.

Downlink timing: Downlink transmission timing of an IAB node and downlink transmission timing of an IAB donor node are aligned.

Uplink timing (receiving or sending): UL receiving timing of an IAB node DU may be aligned with DL receiving timing of the IAB node. Correspondingly, to cooperate with a parent node in simultaneous reception, a child node of the IAB node needs to perform offset based on uplink sending timing in Case 1.

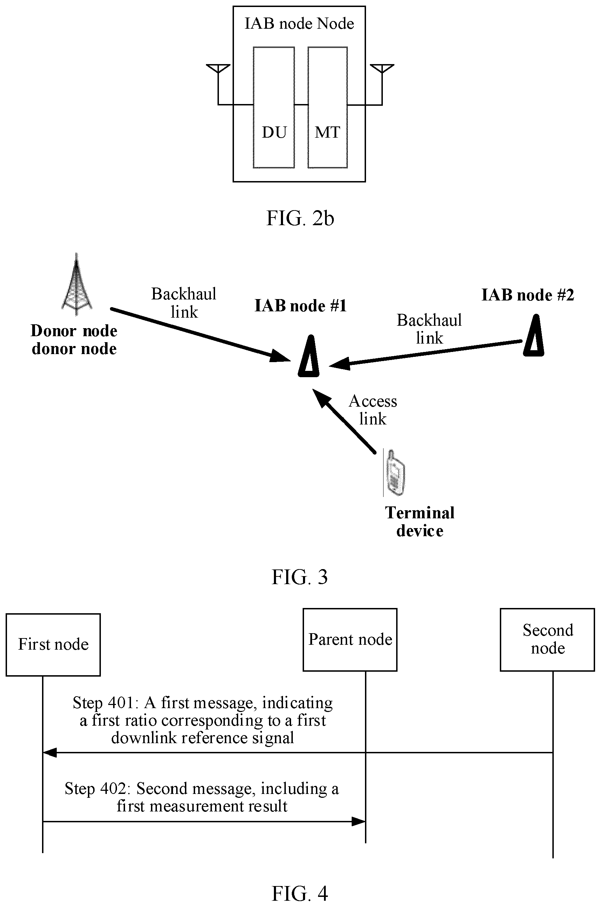

In FIG. 3, an IAB node #1 receives an uplink signal transmitted by a child node IAB node #2 when the IAB node #1 receives a downlink signal transmitted by a donor. In this case, simultaneous reception in SDM spatial multiplexing transmission is enabled.

During implementation, an MT of an IAB node may obtain an offset value offset of uplink sending time. When the MT needs to perform multiplexing transmission, or a parent node performs an explicit indication, the IAB node MT determines the uplink sending time based on current uplink timing advance TA and the offset, for example, by adding the TA and the offset. Alternatively, the donor or the parent node preconfigures some time resources, for example, a slot set. The IAB node MT determines, on the time resources, the uplink sending time based on current uplink timing advance TA and the offset.

Case 6 timing: A timing solution used by an IAB to perform space division sending.

Downlink timing: Downlink transmission timing of an IAB node and downlink transmission timing of an IAB donor node are aligned.

Uplink timing (sending): UL sending timing of the IAB node may be aligned with DL sending timing of the IAB node.

6. A network device is a device that can provide a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, may be a gNB or a transmission point (TRP or TP) in a 5G system such as an NR system or one or one group of antenna panels (including a plurality of antenna panels) of a base station in a 5G system, or may be a network node forming a gNB or a transmission point, for example, a baseband unit (BBU) or a distributed unit (DU, distributed unit).

7. A terminal device, which is also referred to as user equipment (user equipment, UE), a mobile station (mobile station, MS), a mobile terminal (mobile terminal, MT), a terminal, or the like, is a device that provides voice and/or data connectivity for a user. For example, the terminal device is a handheld device, a vehicle-mounted device, or the like that has a wireless connection function. Currently, the terminal device may be a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a wireless terminal in vehicle-to-vehicle (Vehicle-to-Vehicle, V2V) communication, or the like.

8. A relay device is an entity that can receive information from a terminal device, a network device, or another relay device, and forward the information to another terminal, another network device, or another relay device. A name of the relay device may be a relay node (RN), and a form of the relay device may be a small cell, an integrated access and backhaul (integrated access and backhaul, IAB) node, a distributed unit (distributed unit, DU), a terminal device, a transmission and reception point (transmission and reception point, TRP), a relay transmission reception point (rTRP), an IAB node (IAB node), or the like. In NR, the relay node is generally referred to as an IAB node.

9. A term "and/or" in this application describes an association relationship between associated objects and represents that three relationships may exist. For example, A and/or B may represent the following three cases: Only A exists, both A and B exist, and only B exists. A character "/" generally indicates an "or" relationship between the associated objects. "A plurality of" in this application means two or more than two. In addition, it should be understood that in description of this application, terms such as "first" and "second" are merely for distinguishing and description, but should not be understood as indicating or implying relative importance, or should not be understood as indicating or implying a sequence.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (to be specific, a terrestrial communication system). For example, the communication system is a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, or another future communication system. The communication system further supports a communication system integrating a plurality of wireless technologies, for example, may also be used in a system that integrates a non-terrestrial network (non-terrestrial network, NTN) and a ground mobile communication network, such as an unmanned aerial vehicle, a satellite communication system, and high altitude platform station (high altitude platform station, HAPS) communication.

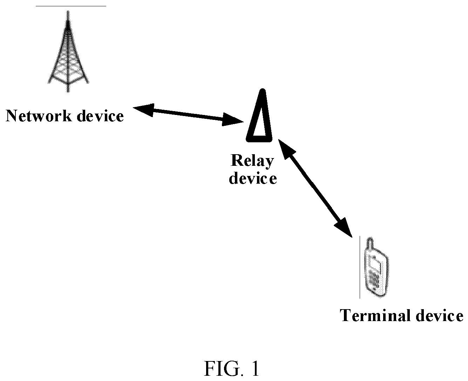

This application is applicable to a wireless communication system including a relay device. FIG. 1 shows an example of a communication system applicable to an embodiment of this application. The communication system includes a network device, a relay device, and a terminal device. For downlink transmission, the relay device receives data sent by the network device, and forwards the data to the terminal device. For uplink transmission, the relay device receives data sent by the terminal device, and forwards the data to the network device.

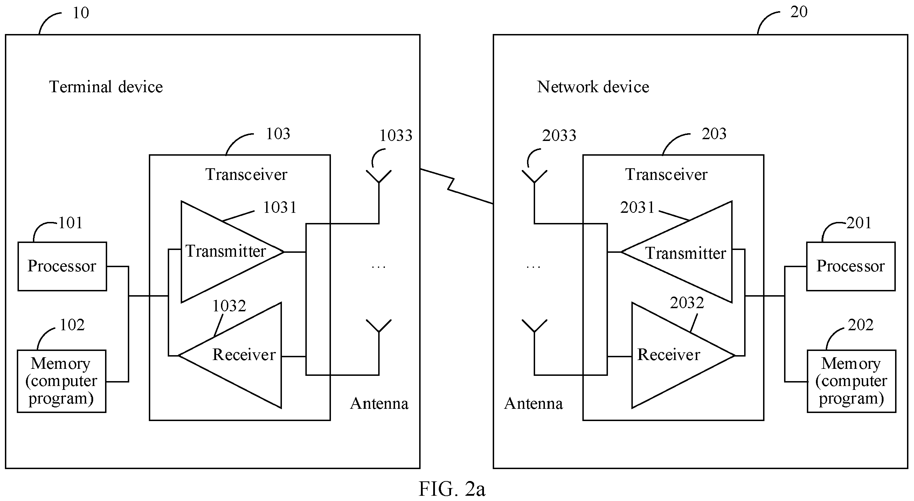

Communication between each network device and each terminal device in the communication system may alternatively be represented in another form. As shown in FIG. 2a, a terminal device 10 includes at least one processor 101 and at least one transceiver 103. Optionally, the terminal device 10 may further include at least one memory 102. The memory 102 may exist independently, or the memory 102 may be integrated with the processor 101, for example, integrated into a chip. The memory 102 can store program code for performing the technical solutions in embodiments of this application, and the processor 101 controls execution of the program code. Various types of computer program code to be executed may also be considered as drivers of the processor 101. For example, the processor 101 is configured to execute the computer program code stored in the memory 102, to implement the technical solutions in embodiments of this application. The transceiver 103 includes a transmitter 1031, a receiver 1032, and an antenna 1033. The receiver 1032 may be configured to receive data or control signaling from a network device 20 by using the antenna 1033, and the transmitter 1031 may be configured to send information to the network device 20 by using the antenna 1033.

The network device 20 includes at least one processor 201 and at least one transceiver 203. Optionally, the network device 20 may further include at least one memory 202. The memory 202 may exist independently, or the memory 202 may be integrated with the processor 201, for example, integrated into a chip. The memory 202 can store program code for performing the technical solutions in embodiments of this application, and the processor 201 controls execution of the program code. Various types of computer program code to be executed may also be considered as drivers of the processor 201. For example, the processor 201 is configured to execute the computer program code stored in the memory 202, to implement the technical solutions in embodiments of this application. The transceiver 203 includes a transmitter 2031, a receiver 2032, and an antenna 2033. The transmitter 2031 may be configured to send data or control signaling to the terminal device 10 by using the antenna 2033, and the receiver 2032 may be configured to receive information of the terminal device 10 by using the antenna 2033.

In this application, the network device in FIG. 2a may be an IAB node or a node for relay communication. A name of the relay device may be a relay node (RN), a relay transmission reception point (rTRP), an IAB node (IAB node), or the like. A parent node of the relay node may be a gNB (including a gNB-DU, a gNB-CU, and the like), or may be another relay node.

As shown in FIG. 2b, the relay node (for example, an IAB node) is divided into an MT (mobile terminal) and a DU module (distributed unit). The MT is a UE function module of the IAB node, in other words, the IAB node communicates with a parent node by using the MT. The DU (distributed unit) is a base station function module of the IAB node, in other words, the IAB node communicates with a child node and UE by using the DU. Both the MT and the DU of the IAB node have complete transceiver modules, and there is an interface between the MT and the DU. However, it should be noted that the MT and the DU are logical modules. In practice, the MT and the DU may share a part of submodules, for example, may share a transceiver antenna and a baseband processing module.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, as a new service scenario emerges, the technical solutions provided in embodiments of this application are also applicable to a similar technical problem.

Usually, a relay node establishes a wireless backhaul link to one or more parent nodes, and accesses a core network through the parent node. The parent node can control the relay node by using a plurality of types of signaling (for example, data scheduling, timing modulation, power control). In addition, the relay node may provide a service for a plurality of child nodes. The parent node of the relay node may be a base station, or may be another relay node, and the child node of the relay node may be another relay node. In addition, the relay node may alternatively provide an access service for UE. A link for communicating with the parent node or the child node is generally referred to as a backhaul link, and a link for communicating with the UE is generally referred to as an access link. In some cases, the parent node may also be referred to as an upstream node, and the child node may also be referred to as a downstream node.

In-band relay is a relay solution in which a backhaul link and an access link share a same band. Because no additional spectrum resource is used, the in-band relay solution has advantages such as high spectral efficiency and low deployment costs. The in-band relay solution is generally subject to a half-duplex constraint. Specifically, when receiving a downlink signal sent by the parent node of the relay node, the relay node cannot send a downlink signal to the child node of the relay node, and when receiving an uplink signal sent by the child node of the relay node, the relay node cannot send an uplink signal to the parent node of the relay node. An in-band relay solution of NR is referred to as an integrated access and backhaul (IAB) solution, and the relay node is referred to as an IAB node. With the evolution of technologies, IAB may further support full duplex.

When the IAB node operates normally, resource multiplexing is performed on the access link and the backhaul link in a time division manner, a space division manner, or a frequency division manner.

In a time division multiplexing scenario, the backhaul link and the access link operate at different moments. Therefore, the IAB node needs to switch between receiving and sending of the backhaul link and receiving and sending of the access link. When switching is performed on the backhaul link and the access link with no interval, in other words, when symbols of the access link and the backhaul link are consecutive, the IAB node has highest resource utilization. However, during implementation, due to various factors such as power amplifier on/off time, a transmission distance, and non-ideal synchronization, switching with no interval cannot be implemented on the backhaul link and the access link. In this case, the IAB node needs to determine a set of available/unavailable symbols of the backhaul link and the access link.

In a space division multiplexing scenario, the backhaul link and the access link may operate at a same moment, an MT and a DU of an IAB node may simultaneously send a signal or receive a signal, or the IAB node may simultaneously receive a downlink signal sent by the parent node on the backhaul link and an uplink signal sent by the child node/UE on the access link. In this case, spectrum efficiency can be improved.

As shown in FIG. 3, a space division receiving scenario of an IAB node #1 is described. If all arrow directions in FIG. 3 are reversed, the scenario is a space division sending scenario, in other words, the IAB node #1 sends signals to both a donor and an IAB node #2.

In a space division receiving scenario, a typical problem is power imbalance "power imbalance", in other words, a difference between a downlink transmission power of a backhaul link and an uplink transmission power of an access link is large. Generally, the downlink transmission power of the backhaul link is far greater than the uplink transmission power of the access link. A parent node uses excessively high power to send a downlink signal. As a result, reception of an uplink signal on an access side of an IAB node DU is affected.

Possible interference to the IAB node during space division receiving affects transmission performance. Therefore, a downlink transmission power adjustment mechanism may be introduced. In a standard, the IAB node is supported to report a desired downlink transmit (DL TX) power (power) adjustment amount to the parent node (for example, a donor node), to indicate the parent node to adjust a downlink transmission power of the parent node in a space division slot/symbol. During actual application, the adjustment amount may be usually used as a power adjustment amount of a data signal or a power adjustment amount of a reference signal. However, in remaining time division multiplexing slots/symbols (to be specific, the IAB nodes, for example, only one module of an MT or a DU of the IAB node #1 in FIG. 3 operates at a same moment), the parent node may not adjust the downlink transmission power based on the downlink transmission power adjustment amount recommended by the IAB node.

Optionally, the IAB node may alternatively indicate an adjustment amount of a downlink transmission power of a child node.

In a recent standard conference (RAN 1 #106e), an IAB downlink power control method is discussed, and the following cases are agreed:
(1) Desired DL-TX power adjustment, indicated by an IAB-MT to a parent node of the IAB-MT to assist with DL-TX power allocation of the parent node, is provided at least for particular time resources.

The desired DL-TX power adjustment may further be associated with spatial configuration (for example, a DL RX beam of the MT).

The desired DL TX power adjustment, indicated by the IAB-MT to its parent-node to assist with the parent-node's DL TX power allocation, is provided at least for specific time resources.

The desired DL TX power adjustment can further be associated with spatial configuration (e.g., MT's DL RX beams).

(2) Support an IAB node indicating adjustment to a DL-TX power of the IAB node to a child node (for example, in response to receiving DL-TX power assistance information from the child node) at least for specific time resources.

The DL-TX power adjustment indication may further be associated with spatial configuration (for example, a DL RX beam of the MT).

Support an IAB-node indicating adjustment to its DL TX power to a child node (e.g., in response to receiving the DL TX power assistance information from the child node) at least for specific time resources.

The DL TX power adjustment indication can further be associated with spatial configuration (e.g., MT's DL RX beams).

Currently, UE determines a channel quality indicator (channel quality indicator, CQI) based on an offset between a downlink reference signal (for example, a channel state information reference signal (channel state information reference signal, CSI-RS)) and a transmission power of a physical downlink shared channel (physical downlink shared channel, PDSCH). A reason is as follows: The downlink reference signal received and measured by the UE is the CSI-RS, but the UE needs to receive downlink data on the PDSCH. Therefore, a network side needs to learn of an equivalent CQI of the UE on the PDSCH, to more accurately schedule the UE (where the CQI represents channel quality, and a higher bit rate and a higher modulation order can be used when the channel quality is high). To enable the UE to calculate and feed back the CQI corresponding to the PDSCH, a base station may configure a ratio of the CSI-RS energy per resource element to PDSCH energy per resource element (energy per resource element, EPRE) for the UE. A value range of the ratio is [-8, 15] dB, where dB directly represents an energy ratio of two signals. This is a common representation means in signal processing and communication. For example, 1:1 corresponds to 0 dB. Specifically, for any one of CSI-RS resources, the base station may configure a "power control offset powerControlOffset", where explanation thereof in a protocol is: powerControlOffset: which is the assumed ratio of PDSCH EPRE to NZP CSI-RS EPRE when UE derives CSI feedback and takes values in the range of [-8, 15] dB with 1 dB step size.

In a current protocol, the base station sends the foregoing configuration to the UE in CSI-RS resource configuration by using RRC signaling.

For common UE, because space division multiplexing of a backhaul link and an access link (that is, simultaneously reception or sending of both sides) does not need to be considered, when the CSI-RS resource configuration is designed in an existing protocol, only the ratio of the CSI-RS EPRE to the PDSCH EPRE needs to be configured.

To reduce interference during space division multiplexing, a downlink transmission power adjustment mechanism is introduced in an IAB solution, and a parent node of the IAB node reduces a downlink transmission power. When the IAB node calculates the CQI, a downlink power of the PDSCH needs to be assumed. The downlink power of the PDSCH is obtained based on a power of the CSI-RS and the ratio of the PDSCH EPRE to the CSI-RS EPRE. If the IAB node calculates the CQI based on a downlink transmission power before adjustment (in other words, a PDSCH EPRE assumption that the parent node does not adjust a downlink power during time division multiplexing), scheduling performed by the parent node based on the CQI is inaccurate. For example, when the parent node performs scheduling, a modulation order or a code rate may be excessively high, and a transmission power is high, but a PDSCH transmission power during actual space division multiplexing is not so high. As a result, it is difficult for the IAB node (IAB-MT) to correctly receive a demodulation signal.

Based on this, this application provides a solution of how the parent node (for example, a donor node) configures and indicates a power ratio of a CSI-RS to a PDSCH for space division multiplexing when the IAB-MT is in different transmission modes (space division or time division), and a solution of how the IAB-MT distinguishes between reported information based on two power ratios of a CSI-RS to a PDSCH for feeding back CSI, in other words, which reported CQI is for time division multiplexing (calculated based on an unadjusted PDSCH downlink transmission power) and which reported CQI is for space division multiplexing (calculated based on an adjusted PDSCH downlink transmission power).

The following describes the solution in detail with reference to the accompanying drawings. Features or content denoted by dashed lines in the accompanying drawings may be understood as optional operations or optional structures in embodiments of this application.

In this application, a first message may be replaced with first information, a second message may also be replaced with second information, a third message may also be replaced with third information, and a fourth message may also be replaced with fourth information. A plurality of pieces of information may be sent in one message, or may be sent in a plurality of messages.

In an example, a first node and a second node in this application are in a direct connection relationship, in other words, there is no intermediate node between the first node and the second node, and the second node is a parent node of the first node. For example, the first node is a child IAB node, or an MT of the child IAB node, and the second node may be a parent IAB node, or a DU of the parent IAB node, or may be a donor node.

In an example, a first node and a second node in this application may alternatively be in an indirect connection relationship, in other words, there is an intermediate node between the first node and the second node. For example, the first node is a child IAB node, or an MT of the child IAB node, and the second node is a donor. For example, one or more intermediate nodes (for example, an intermediate IAB node) are further deployed between the first node and the second node.

As shown in FIG. 4, a communication method is provided. The method includes the following steps.

Step 401: A second node sends a first message to a first node, and correspondingly, the first node receives the first message from the second node.

The first message indicates a first ratio corresponding to a first downlink reference signal. The first ratio is a power ratio that is between data and a downlink reference signal and that is obtained after downlink transmission power adjustment performed by a parent node.

A configuration granularity of the ratio may be a downlink reference signal, a CSI-RS resource, a TCI state, another equivalent manner that can represent a beam, another CSI-RS resource having a QCL relationship with a CSI-RS resource, or another CSI-RS resource indicated by beam indication information (for example, a TCI state or QCL information) as a specific CSI-RS resource or ID. In this application, a downlink reference signal corresponding to the first ratio is referred to as the first downlink reference signal.

The ratio mentioned in this application is a power ratio between data and a downlink reference signal. A second ratio is a power ratio used before the downlink transmission power adjustment, and the first ratio is a power ratio obtained after the downlink transmission power adjustment.

Optionally, "obtained after the downlink transmission power adjustment" may be replaced with "measured in a space division mode". In other words, in an optional example, the first ratio is a power ratio that is between data and a downlink reference signal and that is measured in a space division mode. For example, a value range of the first ratio may be [-8, 15] dB, where dB directly represents an energy ratio of two signals. This is a common representation means in signal processing and communication. For example, 1:1 corresponds to 0 dB. The value range of the first ratio may alternatively be another value and another range. This is not limited in this application.

Optionally, "used before the downlink transmission power adjustment" may be replaced with "measured in a time division mode". In other words, in an optional example, the second ratio is a power ratio that is between data and a downlink reference signal and that is measured in a time division mode. A value range of the second ratio may be [-8, 15] dB, where dB directly represents an energy ratio of two signals. This is a common representation means in signal processing and communication. For example, 1:1 corresponds to 0 dB.

A power ratio between data and a downlink reference signal may also be replaced with a power ratio of PDSCH EPRE to NZP CSI-RS EPRE.

In addition, it should be noted that a power ratio between A and B may be a ratio of A to B, or may be a ratio of B to A.

Step 402: The first node sends a second message to the parent node, and correspondingly, the parent node receives the second message from the first node.

The second message includes a first measurement result. The first measurement result is determined based on the first ratio, and the first measurement result is determined based on the first downlink reference signal.

The parent node of the first node may be the same as or different from the second node. Refer to the foregoing descriptions.

The measurement result may be a CSI measurement result (CSI reporting), and the CSI measurement result includes a CQI measurement result.

The measurement result is reported at a granularity of a reference signal.

In this application, the power ratio that is between the data and the downlink reference signal and that is obtained after the downlink transmission power adjustment (or that is measured in the space division mode) is configured for the first node, so that the first node reports, to the parent node, the measurement result obtained based on the power ratio that is between the data and the downlink reference signal and that is obtained after the downlink transmission power adjustment (or that is measured in the space division mode). In this case, the parent node can obtain the measurement result (for example, a CQI measurement result) during measurement in the space division mode, so that the parent node determines a transmission parameter such as an MCS (modulation and coding scheme, modulation and coding scheme) for downlink transmission scheduling in a space division slot (after the downlink transmission power adjustment), and communication performance can be improved.

In an optional example, the second message may further include a second measurement result. The second measurement result is determined based on the second ratio, and the second measurement result is determined based on the first downlink reference signal. The second ratio is a power ratio that is between data and a downlink reference signal and that is used before the downlink transmission power adjustment performed by the parent node.

The first node not only reports the first measurement result obtained based on the first ratio, but also reports the second measurement result obtained based on the second ratio, so that the parent node can determine a transmission parameter such as an MCS for downlink transmission scheduling in a time division slot (before the downlink transmission power adjustment), and communication performance can be improved. The second ratio may be configured for the first node in downlink reference signal resource configuration information. Generally, the downlink reference signal resource configuration information is for configuring a resource ID, a time-frequency position of resource mapping, and the like.

It may be understood that the second measurement result and the first measurement result may be sent to the parent node in one message, or may be sent to the parent node in a plurality of messages.

During actual use, the parent node may send a reference signal to the first node on different resources, for example, may send the reference signal on some resources by using a downlink transmission power before adjustment, or send the reference signal on some resources by using a downlink transmission power after adjustment. A specific resource on which the signal is actually sent by using the adjusted downlink transmission power may be a time resource preconfigured by a donor node or the parent node, for example, a set of slot indexes, or may be dynamically indicated by a parent node DU.

The measurement result may be reported at the granularity of the reference signal, or the measurement result may be reported by using a granularity of a beam.

If a beam for measuring the first downlink reference signal is a beam associated with a downlink power control beam (namely, a first beam), the first node may determine to report the first measurement result corresponding to the beam for measuring the first downlink reference signal, or determine to report the first measurement result and the second measurement result that correspond to the beam for measuring the first downlink reference signal. If a beam for measuring the downlink reference signal is not a beam associated with a downlink power control beam (namely, a first beam), the first node may determine to report the second measurement result corresponding to the beam for measuring the downlink reference signal.

The downlink power control beam means that a downlink transmission power adjustment amount of a beam is reported by using a mechanism supported in a conventional technology, and the parent node responds to the beam for downlink transmission power adjustment. Then, the beam may be referred to as the downlink power control beam.

Beam association may be understood as that two beams have a same ID, or two beams have a QCL relationship. To be specific, that the beam for measuring the first downlink reference signal is associated with the downlink power control beam may be understood as that a beam ID of the beam for measuring the first downlink reference signal is the same as that of the downlink power control beam, or the beam for measuring the first downlink reference signal has a QCL relationship with the downlink power control beam.

For example, if the beam for measuring the first downlink reference signal is a beam 1, or beam indication information of a reference signal that needs to be measured indicates the beam 1, and the beam 1 has an association relationship with the downlink power control beam (namely, the first beam), only a first measurement result corresponding to the beam 1 may be reported, or the first measurement result and a second measurement result that correspond to the beam 1 may be reported.

For example, if the beam for measuring the first downlink reference signal is a beam 2, or beam indication information of a reference signal that needs to be measured indicates the beam 2, and the beam 2 has no association relationship with the downlink power control beam (namely, the first beam), only a second measurement result corresponding to the beam 1 may be reported.

The foregoing beam indication method for measuring a reference signal may be performed based on an existing technical means in a 3GPP standard protocol, and details are not described herein.

In an optional example, the first measurement result is a measurement result corresponding to the beam for measuring the first downlink reference signal, and the beam for measuring the first downlink reference signal is a beam associated with the downlink power control beam (where the downlink power control beam is a beam on which downlink transmission power adjustment is performed, namely, the first beam described below).

In an optional example, the second measurement result is a measurement result corresponding to the beam for measuring the first downlink reference signal. For example, the second measurement result is a measurement result corresponding to the beam for measuring the first downlink reference signal, that is, a result obtained by measuring the first downlink reference signal by an MT by using a configuration indicated by a TCI state ID indicated by a beam, or QCL information based on which the first downlink reference signal is measured, where the QCL information is QCL information indicated by the first beam, and the beam for measuring the first downlink reference signal is a beam that is associated with the downlink power control beam (namely, the first beam). Alternatively, the second measurement result is a measurement result corresponding to the beam for measuring the first downlink reference signal, and the beam for measuring the first downlink reference signal is a beam that is not associated with the downlink power control beam (namely, the first beam).

For example, the beam for measuring the first downlink reference signal includes the beam 1, the beam 2, and a beam 3. In the three beams, the beam 1 has an association relationship with the downlink power control beam (namely, the first beam). When the first measurement result is reported, the first measurement result of the beam 1 is reported. When the second measurement result is reported, second beam measurement results respectively corresponding to the beam 1, the beam 2, and the beam 3 may be reported. Alternatively, only the second measurement result of the beam 1 may be reported, and the second beam measurement results of the beam 2 and the beam 3 are not reported. Alternatively, only the second measurement results of the beam 2 and the beam 3 may be reported, and the second beam measurement result of the beam 1 is not reported.

Indication information of the beam for measuring the first downlink reference signal may be configured in RRC signaling. For example, for a periodic downlink reference signal (for example, a CSI-RS), beam indication information of the periodic downlink reference signal may be configured in a CSI-RS resource configuration. For measurement and reporting of an periodic downlink reference signal (for example, a CSI-RS) or an aperiodic downlink reference signal (for example, a CSI-RS), beam indication information of the periodic downlink reference signal or the aperiodic downlink reference signal may be configured in a reporting configuration associated with CSI. To be specific, the parent node or the base station may trigger different reporting configurations, to achieve an effect of measuring a downlink reference signal by using different beams. Beam indication information of a semi-persistent (Semi-persistent) CSI-RS may be indicated by sending MAC-CE signaling by the parent node or the base station.

The following respectively describes aperiodic, semi-persistent, and periodic measurement modes.

For aperiodic CSI measurement and reporting in the conventional technology, a base station configures, for UE, a beam (TCI state) used during measurement. For an IAB herein, if a beam based on aperiodic CSI measurement is a beam associated with downlink power control, results in two modes need to be reported, or only a result in the space division mode needs to be reported.

The beam associated with the downlink power control means that an IAB-MT reports a downlink transmission power adjustment amount by using the mechanism supported in the conventional technology. The adjustment amount (which is usually a power adjustment amount of data) is configured for a downlink reference signal of the parent node, and/or is configured for a downlink beam (for example, a TCI state, or a TCI state of a downlink reference signal used by a QCL type-D).

That the results in the two modes are reported means that the IAB-MT reports measurement results (for example, CQI measurement results) obtained through calculation by using two assumed power ratios (for example, power ratios of PDSCH EPRE to CSI-RS EPRE).

That only the result in the space division mode is reported means that a measurement result (for example, a CQI measurement result) calculated by using the first ratio is reported.

For semi-persistent CSI measurement, if a TCI corresponding to a CSI-RS resource set (CSI-RS resource set) for which activated semi-persistent CSI measurement and reporting is performed is a beam related to downlink power control, results in two modes need to be reported, or only a result in the space division mode needs to be reported. In the conventional technology, a beam of a semi-persistent CSI-RS may be configured by the base station by using RRC signaling.

For periodic CSI measurement and reporting, in a case in which a beam configured for the periodic CSI measurement and reporting is a beam related to downlink power control (in the conventional technology, a beam of a periodic CSI-RS may be configured by the base station by using RRC signaling), if the first ratio is not received, the IAB-MT reports only a CQI result in a time division multiplexing mode. If the first ratio is received, results in two modes need to be reported, or only a result in the space division mode needs to be reported.

In an optional example, the first node may further send a fourth message to the parent node. The fourth message indicates a downlink transmission power adjustment amount desired by the first node and a second beam corresponding to the desired downlink transmission power adjustment amount. Optionally, the parent node may indicate, to the first node, a downlink transmission power adjustment amount used by the parent node and a corresponding first beam.

The downlink transmission power adjustment amount mentioned in this application is usually a transmission power adjustment amount of downlink data, and both the first ratio and the second ratio are power ratios between the data and the downlink reference signal. In this case, the first node calculates the first measurement result based on the transmission power adjustment amount of the downlink data and the first ratio, and may further calculate the second measurement result based on the transmission power adjustment amount of the downlink data and the second ratio.

Optionally, the downlink transmission power adjustment amount may alternatively be a transmission power adjustment amount of the downlink reference signal. In this case, the power ratio between the data and the downlink reference signal may alternatively be replaced with a power ratio between a synchronization signal (for example, a secondary synchronization signal (secondary synchronization signal, SSS)) and the downlink reference signal. In other words, both the first ratio and the second ratio are power ratios between the synchronization signal (for example, the secondary synchronization signal) and the downlink reference signal. In this case, the first node calculates the first measurement result based on the transmission power adjustment amount of the downlink reference signal and the first ratio, and may further calculate the second measurement result based on the transmission power adjustment amount of the downlink reference signal and the second ratio. Alternatively, information for configuring or indicating the downlink transmission power adjustment amount includes not only the downlink transmission power adjustment amount, to be specific, the transmission power adjustment amount of the downlink reference signal, but also the transmission power adjustment amount of the downlink data.

The power ratio between the secondary synchronization signal SSS and the downlink reference signal is specifically a power ratio between a CSI-RS RE and an SSS RE. The ratio may be configured through a Power offset of NZP CSI-RS RE to SSS RE field.

When the second node is the parent node, the first message may be a new message, or the first message is a message for updating CSI-RS resource configuration information.

An example in which the second node is an IAB node (or a DU of the IAB node) is described.

The first node is directly connected to the second node, and the second node is the parent node of the first node.

When the second node is the IAB node (or the DU of the IAB node), the first message may be a new message, or the first message is a message for updating CSI-RS resource configuration information.

When the second node is the IAB node (or the DU of the IAB node), the first message further indicates the downlink transmission power adjustment amount used by the second node (namely, the parent node) and the corresponding first beam. The first message may be referred to as a downlink power control response message. In this application, an existing downlink power control response message carries information about the first ratio. An existing message is used as the first message, so that signaling exchange can be reduced.

In an optional example, when the second node is the IAB node (or the DU of the IAB node), the first message further indicates the first beam. The first ratio may further implicitly indicate the downlink transmission power adjustment amount used by the second node (namely, the parent node). In other words, the downlink transmission power adjustment amount used by the second node (namely, the parent node) does not need to be additionally indicated in the first message.

The downlink transmission power adjustment is performed on the first beam, and the first beam may also be referred to as a downlink power control beam.

The first message may be carried in L1 signaling or L2 signaling. L1/L2 signaling indication includes indicating the first ratio by using a MAC-CE or DCI signaling.

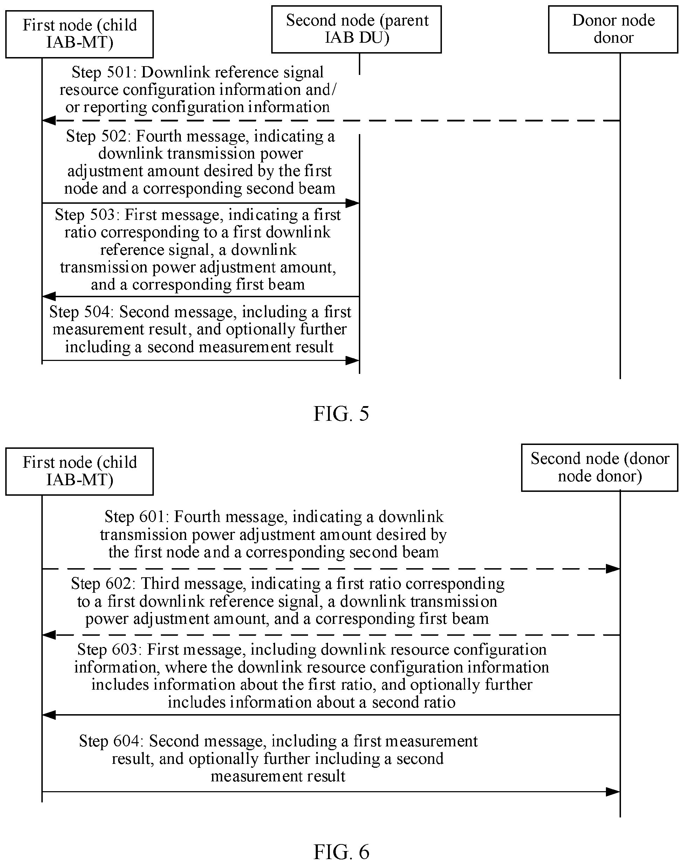

As shown in FIG. 5, a communication method is described. In the method, a parent IAB node (specifically, a DU of the IAB node) configures a first ratio for a child IAB node (specifically, an MT of the child IAB node). In other words, a first node is the MT of the child IAB node (which is referred to as a child IAB-MT for short), and a second node is a DU of the parent IAB node (which is referred to as a parent IAB DU for short).

The method includes the following steps.

Optionally, step 501: A donor node sends downlink reference signal resource configuration information and/or reporting configuration information to the first node (the child IAB-MT).

For example, the donor sends the downlink reference signal resource configuration information to the child IAB-MT by using RRC signaling, to configure a resource for the child IAB-MT to perform downlink reference signal measurement and feedback. The donor is a parent node of the parent IAB node. In other words, the parent IAB node is further set between the donor and the child IAB node. For the downlink reference signal resource configuration information and/or the reporting configuration information, the parent IAB node may be used for transparent transmission.

A downlink reference signal is, for example, a CSI-RS.

In the downlink reference signal (for example, CSI-RS) resource configuration information, for any downlink reference signal resource, a resource ID, a time-frequency position of resource mapping, and a second ratio of the downlink reference signal may be configured. The second ratio is a power ratio that is between data and the downlink reference signal (a PDSCH RE and a CSI-RS RE (resource element)) and that is measured in a time division mode. Optionally, for a downlink reference signal measured in a periodic or semi-persistent manner, a periodicity and a time domain position offset of the downlink reference signal may be further configured.

The reporting configuration information includes but is not limited to one or more of the following: a measurement resource, a reporting manner (periodic reporting, semi-persistent reporting, or aperiodic reporting), a reported measurement amount (L1-RSRP, L1-SINR, or CQI reporting), a reported resource (for example, a PUCCH configuration), and the like. Correspondingly, in addition to the CQI, a reported measurement result may further include L1-reference signal received power (reference signal received power, RSRP), L1-signal to interference plus noise ratio (signal to interference plus noise ratio, SINR), a precoding matrix indicator PMI (precoding matrix indicator), a rank indicator RI (rank indicator), a layer indicator LI (layer indicator), and the like.

The foregoing step 501 may alternatively not be performed.

Step 502: The first node (the child IAB-MT) sends a fourth message to the second node (the parent IAB DU, which is also a parent node), and correspondingly, the second node receives the fourth message from the first node.

The fourth message indicates a downlink transmission power adjustment amount desired by the first node and a second beam corresponding to the desired downlink transmission power adjustment amount.

Downlink transmission power adjustment may be performed at a granularity of a beam. In this application, a beam on which the first node expects to perform downlink transmission power adjustment is referred to as the second beam. The second beam may be a part or all of beams in configured beams. The configured beam refers to a TCI state configured by the donor for the first node (the child IAB-MT), and may be a beam for communication between the first node and the parent IAB node, for example, an activated TCI state. In this application, downlink transmission power adjustment is also applicable to all other beams associated with the configured beam.

The child IAB node reports a desired downlink transmission power adjustment amount and corresponding beam information to the parent node, so that the MT and a DU of the child IAB node perform space division multiplexing reception.

In an optional example, the second node (the parent IAB DU) may further send, to the parent node of the second node, a downlink transmission power adjustment amount desired by the second node and a beam corresponding to the desired downlink transmission power adjustment amount.

In an optional example, the second node may send the fourth message to the parent node of the second node until the fourth message is sent to the donor, and the second node (the parent IAB node) is used for transparent transmission in this process.

Step 503: The second node (the parent IAB DU) sends a first message to the first node (the child IAB-MT), and correspondingly, the first node receives the first message from the second node.

The first message indicates a first ratio corresponding to a first downlink reference signal, and the first message further indicates a downlink transmission power adjustment amount used by the second node and a corresponding first beam. For example, the first message includes at least one of the following information: an identifier of a downlink reference signal resource, a first beam ID, and a TCI state ID corresponding to the first beam, where the TCI state ID indicates a beam.

The first message may be referred to as a downlink power control response message. In an embodiment of this application, an existing downlink power control response message carries information about the first ratio.

The first beam is the same as the second beam, in other words, the second node agrees to adjust all second beams.

Alternatively, when there are a plurality of second beams, the first beam may be a part of the second beams, in other words, the second node agrees to adjust only a part of beams in the second beams.

Optionally, the first message may not include the downlink transmission power adjustment amount used by the second node (namely, the parent node). The first ratio may further implicitly indicate the downlink transmission power adjustment amount used by the second node (namely, the parent node). Therefore, the downlink transmission power adjustment amount used by the second node (namely, the parent node) does not need to be additionally indicated in the first message.

Step 504: The first node (the child IAB-MT) sends a second message to the second node (the parent IAB DU), and correspondingly, the second node receives the second message from the first node. The second message includes a first measurement result and/or a second measurement result.

The first measurement result is determined based on the first ratio, and the second measurement result is determined based on the second ratio. The first measurement result and the second measurement result are determined based on the first downlink reference signal.

In a case in which the measurement result is reported at a granularity of a beam:

If a beam for measuring the first downlink reference signal is a beam associated with a downlink power control beam (namely, the first beam), the first node may report the first measurement result corresponding to the beam for measuring the first downlink reference signal, or report the first measurement result and the second measurement result corresponding to the beam for measuring the first downlink reference signal.

If a beam for measuring the downlink reference signal is not a beam associated with a downlink power control beam (namely, the first beam), the first node may report the second measurement result corresponding to the beam for measuring the downlink reference signal.

For specific details, refer to the foregoing descriptions. Details are not described herein again.

The following uses an example in which the second node is a donor to describe another example.

For example, when the second node is a donor node, the first message includes the downlink reference signal resource configuration information. In other words, the second ratio and existing downlink reference signal resource configuration information are configured in one message. An existing message is used as the first message, so that signaling exchange can be reduced.

For example, the information about the first ratio may be located in the downlink reference signal resource configuration information.

In a conventional technology, the downlink reference signal resource configuration information includes the second ratio measured in a time division mode. In this application, in the downlink reference signal resource configuration information, two ratios may be configured for one reference signal resource, in other words, two ratios measured in the time division mode and in a space division mode are both configured by using the downlink reference signal resource configuration information. Alternatively, in the downlink reference signal resource configuration information, only one ratio can be configured for one reference signal resource. For example, the second ratio measured in the time division mode in the downlink reference signal resource configuration information may be replaced with the second ratio measured in a space division mode.

As shown in FIG. 6, a communication method is described. In the method, a donor configures a first ratio for a child IAB node (specifically, an MT of the child IAB node). In other words, a first node is an MT of a child IAB node (which is referred to as a child IAB-MT for short), and the second node is the donor. If an intermediate node IAB is deployed between the first node and the second node, the intermediate node IAB is a parent node of the first node. If the first node is directly connected to the second node, the second node is a parent node of the first node. FIG. 6 shows an example in which the second node is the parent node of the first node for description.

The method includes the following steps.

Optionally, step 601: The first node (the child IAB-MT) sends a fourth message to the second node (the donor), and correspondingly, the second node receives the fourth message from the first node.

The fourth message indicates a downlink transmission power adjustment amount desired by the first node and a second beam corresponding to the desired downlink transmission power adjustment amount.

Optionally, step 602: The second node (the donor) sends a third message to the first node (the child IAB-MT), and correspondingly, the first node receives the third message from the second node.

The third message indicates a downlink transmission power adjustment amount used by the second node and a corresponding first beam.

In addition, the first ratio may further implicitly indicate the downlink transmission power adjustment amount used by the parent node. Therefore, the third message does not need to be additionally sent, to indicate the downlink transmission power adjustment amount used by the second node (namely, the parent node).

Step 603: The second node (the donor) sends a first message to the first node (the child IAB-MT). The first message includes downlink reference signal resource configuration information.

The downlink reference signal resource configuration information includes information about the first ratio corresponding to a first downlink reference signal, and optionally, may further include information about a second ratio.

Optionally, the first message may further include reporting configuration information.

The first message is configured by using RRC signaling.

A sequence of step 601 and step 602 is not limited, and a sequence of step 601 and step 603 is not limited either.

Step 604: The first node (the child IAB-MT) sends a second message to the second node (the donor), and correspondingly, the second node receives the second message from the first node. The second message includes a first measurement result and/or a second measurement result.

For a process of step 604, refer to step 504. Details are not described again.

For example, when the second node is the donor node, the first message is, for example, a message for updating CSI-RS resource configuration information, or newly defined signaling indicating a power ratio. The first message is carried in the RRC signaling.

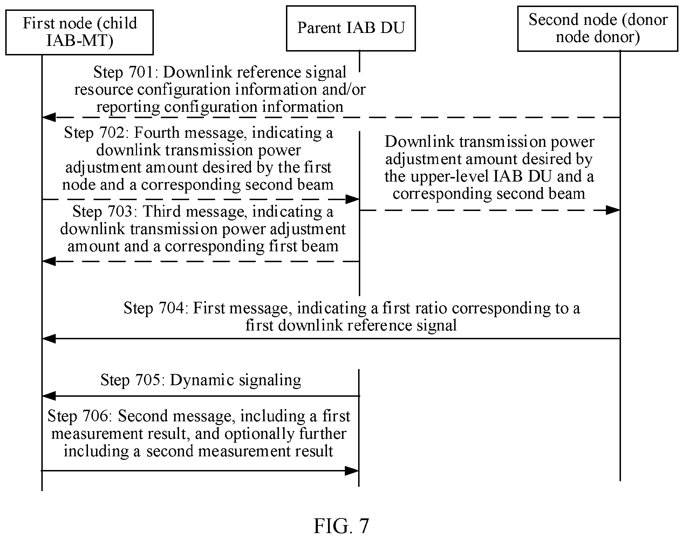

As shown in FIG. 7, a communication method is provided. In the method, a donor configures a first ratio for a child IAB node (specifically, an MT of the child IAB node). In other words, a first node is an MT of a child IAB node (which is referred to a child IAB-MT for short), and a second node is the donor. If an intermediate node IAB is deployed between the first node and the second node, the intermediate node IAB is a parent node of the first node. If the first node is directly connected to the second node, the second node is the parent node of the first node. FIG. 7 shows an example in which the intermediate node IAB is deployed between the first node and the second node for description.

The method includes the following steps.

Optionally, step 701: The second node (the donor) sends downlink reference signal resource configuration information and/or reporting configuration information to the first node (the child IAB-MT).

This process is the same as that of step 501 described above, and details are not described again.

Optionally, step 702: The first node (the IAB-MT) sends a fourth message to the parent node (for example, a parent IAB DU), and correspondingly, the parent node receives the fourth message from the first node.

The fourth message indicates a downlink transmission power adjustment amount desired by the first node and a second beam corresponding to the desired downlink transmission power adjustment amount.

In an optional example, the parent node may send the fourth message to a parent node of the parent node until the fourth message is sent to the second node donor.

For this process, refer to step 502 described above. Details are not described again.

Optionally, Step 703: The parent node (for example, the parent IAB DU) sends a third message to the first node (the child IAB-MT), and correspondingly, the first node receives the third message from the parent node.

The third message indicates a downlink transmission power adjustment amount used by the parent node and a corresponding first beam.

In addition, the first ratio may further implicitly indicate the downlink transmission power adjustment amount used by the parent node. Therefore, the third message does not need to be additionally sent, to indicate the downlink transmission power adjustment amount used by the second node (namely, the parent node).

Step 704: The second node (the donor) sends a first message to the first node (the child IAB-MT), and correspondingly, the first node receives the first message from the second node. The first message indicates the first ratio corresponding to a first downlink reference signal.

A sequence of step 704, step 701, step 702, and step 703 is not limited.

Optionally, step 705: The parent node (for example, the parent IAB DU) sends dynamic signaling (for example, a MAC-CE or a PDCCH) to the first node (the child IAB-MT). The dynamic signaling is for binding the first ratio (for example, a power ratio of PDSCH EPRE to NZP CSI-RS EPRE) on a report ID, a trigger state, a CSI-RS resource, or a beam.

In an example, MAC-CE signaling indicates that the power ratio that is of the PDSCH EPRE to the NZP CSI-RS EPRE, that is used for a space division mode, and that corresponds to Report ID A is B. After the Report ID A is triggered, the IAB-MT (the first node) needs to perform measurement and reporting based on pre-obtained configuration information, where a measurement result (for example, a CQI) is calculated based on the power ratio B, and the result is reported. Alternatively, both a time division measurement result and a space division measurement result are reported.

In a conventional technology, the trigger state is a DCI bit sequence used by a base station to trigger UE to perform aperiodic measurement and reporting. When a specific trigger state is configured, for example, "001010" is associated with report ID #2, when the UE receives the bit sequence "001010" in a CSI request field of DCI, the UE may determine that a measurement configuration that a network expects to trigger is a reporting configuration corresponding to report ID #2, where the reporting configuration includes a reference signal resource identifier.

In this embodiment, the specific trigger state may be bound to space division multiplexing reporting by using a pre-configuration method. When receiving, in the CSI request field of the DCI sent by the parent node DU, a bit sequence that is preconfigured to be bound to reporting of the space division result, the IAB-MT measures and calculates a measurement result (for example, a CQI) by using the obtained ratio, and reports the measurement result.

In another example, the parent node switches, by using dynamic signaling, a power ratio (for example, a power ratio of PDSCH EPRE to NZP CSI-RS EPRE) used for CSI reporting, in other words, switches a time division measurement result or a space division measurement result reported by a child node MT. Alternatively, both the time division measurement result and the space division measurement result are reported.

The dynamic signaling may be the DCI or a MAC-CE. For example, a bit is added to the DCI to indicate a reporting state of the measurement result. For example, when the bit is 0, CSI reporting triggered by the DCI includes only a time division multiplexing result (to be specific, a measurement result is not calculated by using a first ratio that is newly configured but is calculated by using only a second ratio). For example, when the bit is 1, CSI reporting triggered by the DCI includes a space division multiplexing result. Alternatively, when the bit is 1, both the time division measurement result (determined based on the second ratio) and the space division measurement result (determined based on the first ratio) are reported. In addition to introducing a new field, an existing field or some existing fields may alternatively be redefined/interpreted, to implement the foregoing functions.

Step 706: The first node sends a second message to the parent node (for example, the parent IAB DU), and correspondingly, the parent node receives the second message from the first node. The second message includes a first measurement result and/or a second measurement result.

For a process of step 706, refer to step 504. Details are not described again.

In some cases, the IAB node includes a DU part and an MT part. For any IAB node 1, the IAB node 1 needs to enable arrival time of a downlink signal sent by a parent node 2 (for example, a DU of a parent IAB node or a donor) to an MT of the IAB node 1 to be aligned with arrival time of an uplink signal sent by a child node 3 (for example, an MT of a child IAB node or UE) of the IAB node 1 to a DU of the IAB node 1. Based on a principle of OFDM signals, symbol-aligned OFDM signals are orthogonal to each other, and inter-carrier interference is not generated. Therefore, signal arrival time is aligned, which facilitates the IAB node to perform space division reception.

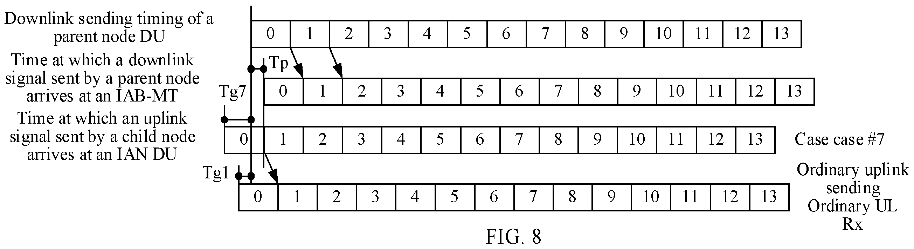

FIG. 8 provides an example of timing alignment. Symbol-level alignment is performed on time (symbol 1#) at which the uplink signal sent by the child node 3 arrives at the DU of the IAB node 1 and time (symbol 0#) at which the downlink signal sent by the parent node 2 arrives at the MT of the IAB node 1, that is, a position shown by a vertical line in the figure. Because #0 is not aligned to #0, the timing alignment is not slot/subframe-level alignment.

However, a bottom row in FIG. 8 indicates time at which uplink sending of the child node IAB-MT in a non-space receiving slot of the parent node arrives at the parent node DU, in other words, the child IAB-MT uses arrival time in Case 1 timing in the key terms. It can be seen that there is a fixed offset between the arrival time and arrival time of Case 7, where the fixed offset is referred to as an offset in a standard.

It can be learned from FIG. 8 that Tg7=Tg1+offset, and Tg7+Tp=symbol duration. Tp indicates a transmission delay of a signal from the parent node to the IAB-MT. The following may be obtained based on the foregoing two equations:
Tg1+offset+Tp=symbol duration, where Tg1 is a timing difference between uplink reception and downlink sending. A range of a value of Tg1 during implementation is defined in a protocol, and the value is generally referred to as TA_offset in the protocol. In addition, because an IAB node is fixedly deployed, and a Tp transmission delay is related to a broadcast distance, Tp is also a fixed value. Therefore, in order to enable the equation to be true, the offset is directly related to the symbol duration.

If a space division problem of the IAB is not considered, when conventional UE or the IAB node operates only in a time division multiplexing mode, uplink sending timing is determined by using a timing advance (timing advance, TA) in a conventional technology. A base station (a parent DU of the IAB node) may control/adjust a value of the TA by using MAC-CE signaling, to control uplink sending time of the UE or the child IAB-MT.

In the conventional technology, a relationship between the offset and the symbol duration is not considered. However, actually, a duration of an OFDM symbol is related to a subcarrier spacing. Therefore, this application provides a solution, so that an IAB node can accurately determine an offset required by the IAB node for enabling Case 7 timing and for space division multiplexing.

For example, the IAB node or the donor node indicates an offset of the uplink sending timing to the child IAB node MT, where the offset is for determining the uplink sending timing. The sending timing takes effect only in some slots, and the sending timing is obtained based on the TA plus an offset value. An effective slot may be a slot index set preconfigured by the parent node or the donor node, or may be configured as a part of a multiplexing parameter set. The multiplexing parameter set indicates a parameter that should be used when the IAB node performs multiplexing sending or reception.

Optionally, the configuration parameter includes one or more of the following information.

Information 1: a setting situation of a guard band among frequency bands during communication transmission, indicating whether the guard band is required when an MT and a DU that are of a relay node perform frequency division multiplexing.

Information 2: a guard band size, indicating, when frequency division multiplexing is performed for access and backhaul of the relay node, a size of a frequency domain resource reserved between a frequency domain resource used by the MT and a frequency domain resource used by the DU, where the reserved frequency domain resource is not used by the MT or the DU. For example, the =guard band size may be represented by a quantity of physical resource blocks (PRBs, physical resource blocks).

Information 3: a quantity of guard symbols, indicating time required for switching between the MT and the DU of the relay node during operation.

Information 4: an undesired beam set, indicating that the relay node performs space division on the MT and the DU.

Information 5: a carrier frequency TRx quantity, indicating a quantity of ports that can be used in access or backhaul communication when the relay node performs space division multiplexing or frequency division multiplexing.

Information 6: a setting situation of a downlink receive power interval of the mobile terminal MT of the relay node, indicating a range or an adjustment amount of a downlink transmission power desired by the MT when the relay node performs space division reception, for example, reducing X dB based on a downlink transmit signal power of a current parent node.

Information 7: a maximum quantity of demodulation reference signal DMRS ports for downlink scheduling of the MT of the relay node.

Information 8: a maximum quantity of DMRS ports for uplink scheduling of the MT of the relay node.

Information 9: a set of effective slots, indicating slots to which the multiplexing transmission parameter should be used.

The foregoing information may be configured in one piece of signaling, or may be configured in a plurality of pieces of signaling. This is not limited in this application. Alternatively, one or more of the foregoing information may be separately configured as a plurality parameter sets in the plurality of pieces of signaling, and a parent node of the relay node may further associate the plurality of parameter sets by using dynamic signaling, and indicate that the relay node is effective and applied.

For example, a donor base station or the parent node of the relay node may configure a plurality of groups of configuration parameters by using signaling, and each group of configuration parameters includes one or more of the foregoing information. Each group of parameters may be identified by one ID, as shown in the following structure.

Multiplexing parameter configuration:

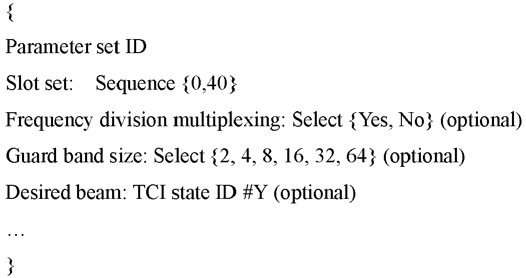

The foregoing parameters may also be reported by the relay node to the parent node or the donor node. In other words, after a parameter desired by the relay node is reported, the parent node or the donor node configures the parameter for the relay node.

The parent node of the relay node may further indicate, by using DCI signaling or MAC-CE signaling, one parameter set ID, which indicates an effective parameter set of the relay node. After the indicated parameter set takes effect, the relay node performs space division transmission on a preconfigured space division transmission time resource based on the parameter indicated by the parameter set.

For example, the donor base station or the parent node of the relay node may configure a plurality of groups of configuration parameters by using signaling, and each group of configuration parameters includes one or more of the foregoing information. Each group of parameters may be identified by one ID, as shown in the following structure.

Multiplexing parameter configuration:

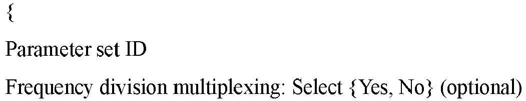

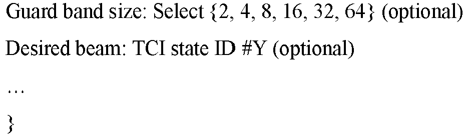

The foregoing parameters may also be reported by the relay node to the parent node or the donor node. In other words, after a parameter desired by the relay node is reported, the parent node or the donor node configures the parameter for the relay node.

The parent node of the relay node may further indicate, by using DCI signaling or MAC-CE signaling, one parameter set ID, which indicates an effective parameter set of the relay node. After the indicated parameter set takes effect, the relay node performs space division transmission on a preconfigured space division transmission time resource based on the indicated parameter.

Optionally, a signaling format is as follows:

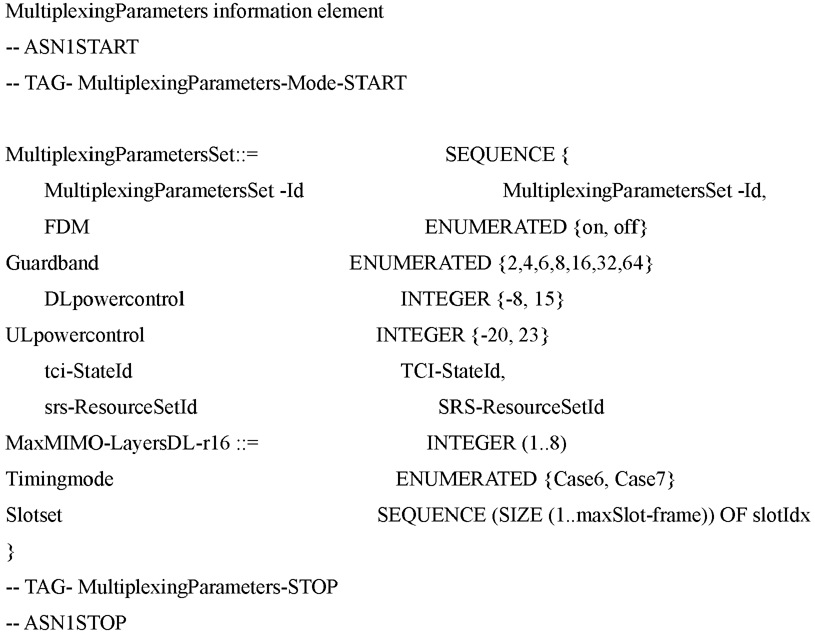

In a possible implementation, the IAB node or the donor node sends signaling to the child IAB node MT, where the signaling includes a plurality of offset values and subcarrier spacings corresponding to the plurality of offset values.
(a) If a specific SCS (subcarrier spacing) is used for an active uplink BWP (bandwidth part, bandwidth part) of the child IAB-MT, the child IAB-MT obtains duration *T_{d}* of an OFDM symbol based on the SCS, and then calculates a corresponding offset. A calculation formula is *Offset* = *T_{d}* - *TA_{offset}* - *Tₚ. Tₚ* may be determined based on a current uplink timing advance. In a typical configuration, the uplink timing advance TA=2**Tₚ*.
(b) When a scheduling indication or an explicit operating mode indication (for example, an uplink sending timing adjustment indication in the figure) is received, this value may be used to cooperate with the parent node for performing space division reception. The operating mode indication may be in either explicit or implicit manner, and is only for helping the IAB node determine a timing type that should be used. A specific manner is not limited. For example, the IAB node determines, based on the foregoing parameter configuration, that corresponding timing types are used in some slots, in other words, corresponding offsets are applied.
(c) A correspondence relationship between the offset and the SCS is shown, for example, in the following Table 1. It is not limited that the parent node needs to provide a correspondence relationship between each SCS and each offset in one piece of signaling. In other words, only a part of items in the following Table may be included. The correspondence relationship reflected in actual signaling may also be not limited to a form of the table. Whether another manner that can reflect the correspondence relationship between the SCS and the offset is used is not limited in this embodiment. The SCS is not limited to the following SCSs, for example, the SCSs may alternatively be 480 kHz and 960 kHz.

**Table 1: Correspondence relationship between a subcarrier spacing and an offset value.**

| SCS | Timing offset relative to a TA |
|---|---|
| 15 kHz | Offset value 1 |
| 30 kHz | Offset value 2 |
| 60 kHz | Offset value 3 |
| 120 kHz | Offset value 4 |

(d) Alternatively, a correspondence relationship indicated by signaling is a correspondence relationship between an IAB-MT BWP index and an offset. The BWP index may be replaced with an index of a downlink BWP, or may be replaced with an index of an uplink BWP.

(e) For different BWPs that use a same SCS, a same offset value may be used, and repeated notification is not required. Alternatively, for different carriers (carriers) or serving cells (serving cells) and/or BWPs that use a same SCS, a same offset value may be used, and repeated notification is not required.

A process of calculating and determining the offset may also be performed by a parent node of the IAB node. After determining the offset, the parent node indicates the IAB node by using signaling. A typical value range of the offset is *T_{d}* - *T_{p,max}* - *TA_{offset}* ≤ *Offset < T_{d}* - *TA_{offset}*, or 2*T_{d}* - *T_{p,max}* - *TA_{offset}* ≤ *Offset < T_{d} - TA_{offset}*. *T_{p,max}* represents a specified maximum broadcast delay, and a value range is related to a maximum transmission distance supported by IAB deployment. For example, it is assumed that at a broadcast distance of 2.5 km, *T_{p,max}* = 8.333 ... µs (microsecond).

In another possible implementation, the IAB node or the donor node sends signaling to the child IAB node MT, where the signaling includes an offset value and an SCS or a BWP corresponding to the offset value.
(a) If the IAB-MT is further configured with a BWP using another SCS, when the IAB-MT performs transmission based on these parameters, the IAB autonomously performs conversion and determines, based on a relationship between symbol durations of different SCSs, an offset value corresponding to the SCSBWP, and determines uplink sending timing in a space division multiplexing timing mode by adding a TA to the calculated offset.

For example, a symbol duration at 30 kHz is A. In this case, a symbol duration at 15 kHz is 2A, a symbol duration at 60 kHz is A/2, and a symbol duration at 120 kHz is A/4.

When an offset length configured for 30 kHz is X, and a 30 kHz subcarrier spacing is used in IAB-MT uplink, new uplink sending timing may be directly calculated as TA+X. If the IAB is switched to a subcarrier spacing of 15 kHz, a new offset is set to X'=X+A.

The foregoing conversion is an example. In another case, a conversion manner is not explicitly specified in a protocol. The IAB-MT performs conversion based on implementation, to determine an offset in another SCS.

(b) This implementation may be further used in combination with the first implementation. For example, based on the method in 1, offsets corresponding to the 15 kHz subcarrier spacing and a 60 kHz subcarrier spacing are configured, and the method in 2 is used to calculate an offset corresponding to the 30 kHz subcarrier spacing based on an offset corresponding to the 15 kHz subcarrier spacing, an offset corresponding to a 120 kHz subcarrier spacing is calculated based on an offset corresponding to the 60 kHz subcarrier spacing. (Generally, 15 kHz and 30 kHz subcarrier spacings are used for low frequency bands, that is, FR1 frequency bands defined in a protocol. 60 kHz and 120 kHz subcarrier spacings are used for high frequency bands, for example, FR2 frequency bands defined in the protocol, where FR=frequency range. Different frequency ranges may need to be configured with different offsets.)

In another possible implementation, each time when the child IAB node MT needs to change an active uplink BWP and/or send an SCS in an uplink manner, the IAB node or the donor node sends signaling to the child IAB node MT, to indicate a value or an index of an offset.
(a) The foregoing signaling needs to be sent only when the child IAB-MT needs to configure an additional sending timing offset to cooperate with the parent node to perform space division reception.

The foregoing describes the method in embodiments of this application, and the following describes an apparatus in embodiments of this application. The method and the apparatus are based on a same technical concept. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It is to be noted that, in this embodiment of this application, module division is an example, and is merely a logical function division. In a specific implementation, another division manner may be used.

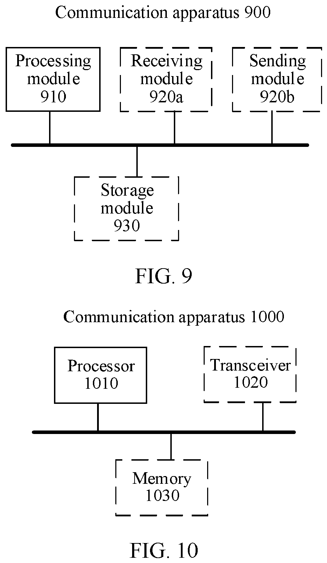

Based on the same technical concept as the foregoing method, FIG. 9 is a schematic diagram of a structure of a communication apparatus 900. The apparatus 900 may include a processing module 910, and optionally, further includes a receiving module 920a, a sending module 920b, and a storage module 930. The processing module 910 may be separately connected to the storage module 930, the receiving module 920a, and the sending module 920b, and the storage module 930 may also be connected to the receiving module 920a and the sending module 920b.

In an example, the receiving module 920a and the sending module 920b may alternatively be integrated, and are defined as a transceiver module.

In an example, the apparatus 900 may be a first node, or may be a chip or a functional unit used in the first node. The apparatus 900 has any function of the first node in the foregoing method. For example, the apparatus 900 can perform steps performed by the first node in the methods in FIG. 4, FIG. 5, FIG. 6, and FIG. 7.

The receiving module 920a may perform a receiving action performed by the first node in the foregoing method embodiments.

The sending module 920b may perform a sending action performed by the first node in the foregoing method embodiments.

The processing module 910 may perform an action, other than the sending action and the receiving action, performed by the first node in the foregoing method embodiments.

In an example, the receiving module 920a is configured to receive a first message from a second node. The first message indicates a first ratio corresponding to a first downlink reference signal. The first ratio is a power ratio that is between data and a downlink reference signal and that is obtained after downlink transmission power adjustment is performed by a parent node.

The sending module 920b is configured to send a second message to the parent node. The second message includes a first measurement result. The first measurement result is determined based on the first ratio, and the first measurement result is determined based on the first downlink reference signal.

In an example, when the second node is the parent node, the first message further indicates a downlink transmission power adjustment amount used by the parent node and a corresponding first beam.

In an example, when the second node is a donor node, the first message includes downlink reference signal resource configuration information.

In an example, the receiving module 920a is further configured to receive a third message from the parent node. The third message indicates the downlink transmission power adjustment amount used by the parent node and the corresponding first beam.

In an example, the second message further includes a second measurement result. The second measurement result is determined based on a second ratio, and the second measurement result is determined based on the first downlink reference signal. The second ratio is a power ratio that is between data and a downlink reference signal and that is used before downlink transmission power adjustment is not performed by the parent node.

The processing module 910 is configured to: if a beam for measuring the first downlink reference signal is a beam associated with the first beam, determine to report the first measurement result corresponding to the beam for measuring the first downlink reference signal, or determine to report the first measurement result and the second measurement result corresponding to the beam for measuring the first downlink reference signal; or if the beam for measuring a downlink reference signal is not a beam associated with the first beam, determine to report the second measurement result corresponding to the beam for measuring the downlink reference signal.

The sending module 920b is further configured to send a fourth message to the parent node. The fourth message indicates a downlink transmission power adjustment amount desired by the apparatus and a second beam corresponding to the desired downlink transmission power adjustment amount.

In an example, the storage module 930 may store computer-executable instructions of the method performed by the first node, so that the processing module 910, the receiving module 920a, and the sending module 920b perform the method performed by the first node in the foregoing example.

For example, the storage module may include one or more memories. The memory may be one or more devices or components in a circuit that are for storing a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the apparatus 900 may be a second node, or may be a chip or a functional unit used in the second node. The apparatus 900 has any function of the second node in the foregoing method. For example, the apparatus 900 can perform steps performed by the second node in the methods in FIG. 4, FIG. 5, FIG. 6, and FIG. 7.

The receiving module 920a may perform a receiving action performed by the second node in the foregoing method embodiments.

The sending module 920b may perform a sending action performed by the second node in the foregoing method embodiments.

The processing module 910 may perform an action, other than the sending action and the receiving action, performed by the second node in the foregoing method embodiments.

In an example, the processing module 910 is configured to generate a first message.

In an example, the sending module 920b is configured to send the first message to a first node. The first message indicates a first ratio corresponding to a first downlink reference signal. The first ratio is a power ratio that is between data to a downlink reference signal and that is obtained after downlink transmission power adjustment is performed by the second node.

The receiving module 920a is configured to receive a second message from the first node. The second message includes a first measurement result. The first measurement result is determined based on the first ratio, and the first measurement result is determined based on the first downlink reference signal.

In an example, when the second node is the parent node, the first message further indicates a downlink transmission power adjustment amount used by the second node and a corresponding first beam.

In an example, when the second node is a donor node, the first message includes downlink reference signal resource configuration information.

In an example, the sending module 920b is configured to send a third message to the first node. The third message indicates the downlink transmission power adjustment amount used by the second node and the corresponding first beam.

In an example, the second message further includes a second measurement result. The second measurement result is determined based on a second ratio, and the second measurement result is determined based on the first downlink reference signal. The second ratio is a power ratio that is between data and a downlink reference signal and that is used before downlink transmission power adjustment is not performed by the second node.

The receiving module 920a is configured to receive a fourth message from the first node. The fourth message indicates a downlink transmission power adjustment amount desired by the first node and a second beam corresponding to the desired downlink transmission power adjustment amount.

In an example, the storage module 930 may store computer-executable instructions of the method performed by the second node, so that the processing module 910, the receiving module 920a, and the sending module 920b perform the method performed by the second node in the foregoing example.

For example, the storage module may include one or more memories. The memory may be one or more devices or components in a circuit that are for storing a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented using a general bus architecture.

FIG. 10 is a schematic block diagram of a communication apparatus 1000.

The apparatus 1000 may include a processor 1010, and optionally, further include a transceiver 1020 and a memory 1030. The transceiver 1020 may be configured to receive a program or instructions and transmit the program or the instructions to the processor 1010. Alternatively, the transceiver 1020 may be configured to perform communication interaction between the apparatus 1000 and another communication device, for example, exchange control signaling and/or service data. The transceiver 1020 may be a code and/or data read/write transceiver, or the transceiver 1020 may be a signal transmission transceiver between the processor and the transceiver. The processor 1010 and the memory 1030 are electrically coupled.

In an example, the apparatus 1000 may be a first node, or may be a chip used in the first node. It should be understood that the apparatus has any function of the first node in the foregoing method. For example, the apparatus 1000 can perform steps performed by the first node in the methods in FIG. 4, FIG. 5, FIG. 6, and FIG. 7. For example, the memory 1030 is configured to store a computer program. The processor 1010 may be configured to invoke the computer program or instructions stored in the memory 1030, to perform the method performed by the first node in the foregoing example, or perform, by using the transceiver 1020, the method performed by the first node in the foregoing example.

In an example, the apparatus 1000 may be a second node, or may be a chip used in the second node. It should be understood that the apparatus has any function of the second node in the foregoing method. For example, the apparatus 1000 can perform steps performed by the second node in the methods in FIG. 4, FIG. 5, FIG. 6, and FIG. 7. For example, the memory 1030 is configured to store a computer program. The processor 1010 may be configured to invoke the computer program or instructions stored in the memory 1030, to perform the method performed by the second node in the foregoing example, or perform, by using the transceiver 1020, the method performed by the second node in the foregoing example.

The processing module 910 in FIG. 9 may be implemented by using the processor 1010.

The receiving module 920a and the sending module 920b in FIG. 9 may be implemented by using the transceiver 1020. Alternatively, the transceiver 1020 includes a receiver and a transmitter. The receiver performs functions of the receiving module, and the transmitter performs functions of the sending module.

The storage module 930 in FIG. 9 may be implemented by using the memory 1030.

As a possible product form, the apparatus may be implemented by a general-purpose processor (the general-purpose processor is also referred to as a chip or a chip system).

In a possible implementation, the general-purpose processor implementing the apparatus used in the first node or the apparatus used in the second node includes a processing circuit (the processing circuit may also be referred to as a processor), and optionally a storage medium (the storage medium may also be referred to as a memory) and an input/output interface for internal connection to and communication with the processing circuit. The storage medium is configured to store instructions executed by the processing circuit, to perform the method performed by the first node or the second node in the foregoing examples.

The processing module 910 in FIG. 9 may be implemented by using the processing circuit.

The receiving module 920a and the sending module 920b in FIG. 9 may be implemented by using the input/output interface. Alternatively, the input/output interface includes an input interface and an output interface. The input interface performs a function of the receiving module, and the output interface performs a function of the sending module.

The storage module 930 in FIG. 9 may be implemented by using a storage medium.

As a possible product form, the apparatus in embodiments of this application may be further implemented by using one or more FPGAs (field-programmable gate arrays), a PLD (programmable logic device), a controller, a state machine, a gate logic, a discrete hardware component, any other proper circuit, or any combination of circuits that can perform various functions described in this application.

An embodiment of this application further provides a computer-readable storage medium that stores a computer program. When the computer program is executed by a computer, the computer is enabled to perform the foregoing communication methods. In other words, the computer program includes instructions for implementing the foregoing communication methods.

An embodiment of this application further provides a computer program product. The computer program product includes computer program code. When the computer program code is run on a computer, the computer is enabled to perform the foregoing communication methods.

An embodiment of this application further provides a communication system. The communication system includes a first node and a second node that perform the foregoing communication methods.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), serving as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate based on instructions of a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, method steps and units may be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in another form.

The units described as separate parts may or may not be physically separate, and parts displayed as units may or may not be physical units, may be located in one position, or may be distributed on a plurality of network units. A part or all of the units may be selected based on an actual requirement to achieve objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or a part contributing to the conventional technology, or all or a part of the technical solutions may be represented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

A term "and/or" in this application describes an association relationship between associated objects and represents that three relationships may exist. For example, A and/or B may represent the following three cases: Only A exists, both A and B exist, and only B exists. A character "/" generally indicates an "or" relationship between the associated objects. "A plurality of" in this application means two or more than two. In addition, it should be understood that in description of this application, terms such as "first" and "second" are merely for distinguishing and description, but should not be understood as indicating or implying relative importance, or should not be understood as indicating or implying a sequence.

Although exemplary embodiments of this application have been described, a person skilled in the art can make changes and modifications to these embodiments once the person learn a basic inventive concept. Therefore, the following claims are intended to be construed as to cover the preferred embodiments and all changes and modifications falling within the scope of this application.

Clearly, a person skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

## Claims

1. A communication method, comprising:
receiving, by a first node, a first message from a second node, wherein the first message indicates a first ratio corresponding to a first downlink reference signal, the first ratio is a power ratio that is between data and a downlink reference signal and that is obtained after downlink transmission power adjustment performed by a parent node, and the first ratio indicates a downlink transmission power adjustment amount used by the second node; and
sending, by the first node, a second message to the parent node, wherein the second message comprises a first measurement result, the first measurement result is determined based on the first ratio, and the first measurement result is determined based on the first downlink reference signal.

2. The method according to claim 1, wherein when the second node is the parent node, the first message further indicates a first beam corresponding to the downlink transmission power adjustment amount used by the parent node.

3. The method according to claim 2, wherein the first message indicates the first beam by using one or more of the following:
a resource identifier of the first downlink reference signal, an identifier of the first beam, and a TCI state identifier corresponding to the first beam.

4. The method according to claim 2 or 3, further comprising:
when a beam for measuring the first downlink reference signal is a beam associated with the first beam, determining to report the first measurement result corresponding to the beam for measuring the first downlink reference signal.

5. The method according to any one of claims 1 to 4, wherein before the receiving a first message from a second node, the method further comprises:
sending, by the first node, a fourth message to the parent node, wherein the fourth message indicates a downlink transmission power adjustment amount desired by the first node, and the fourth message further indicates a second beam or a second downlink reference signal corresponding to the desired downlink transmission power adjustment amount.

6. The method according to claim 5, wherein the fourth message indicates the second beam by using one or more of the following:
a resource identifier of the second downlink reference signal, an identifier of the second beam, and a TCI state identifier corresponding to the second beam.

7. The method according to claim 1, wherein when the second node is a donor node, the first message comprises downlink reference signal resource configuration information.

8. The method according to claim 7, wherein before the sending, by the first node, a second message to the second node, the method further comprises:
receiving, by the first node, a third message from the parent node, wherein the third message indicates a downlink transmission power adjustment amount used by the parent node and a corresponding first beam.

9. The method according to any one of claims 1 to 8, wherein the second message further comprises a second measurement result, the second measurement result is determined based on a second ratio, the second measurement result is determined based on the first downlink reference signal, and the second ratio is a power ratio that is between the data and the downlink reference signal and that is used before the downlink transmission power adjustment performed by the parent node.

10. The method according to claim 9, further comprising:
when the beam for measuring the first downlink reference signal is the beam associated with the first beam, determining to report the first measurement result and the second measurement result that correspond to the beam for measuring the first downlink reference signal; and
when the beam for measuring the downlink reference signal is not the beam associated with the first beam, determining to report the second measurement result corresponding to the beam for measuring the downlink reference signal.

11. A communication method, comprising:
sending, by a second node, a first message to a first node, wherein the first message indicates a first ratio corresponding to a first downlink reference signal, the first ratio is a power ratio that is between data and a downlink reference signal and that is obtained after downlink transmission power adjustment performed by the second node, and the first ratio indicates a downlink transmission power adjustment amount used by the second node; and
receiving, by the second node, a second message from the first node, wherein the second message comprises a first measurement result, the first measurement result is determined based on the first ratio, and the first measurement result is determined based on the first downlink reference signal.

12. The method according to claim 11, wherein when the second node is a parent node, the first message further indicates a first beam corresponding to the downlink transmission power adjustment amount used by the second node.

13. The method according to claim 12, wherein the first message indicates the first beam by using one or more of the following:
a resource identifier of the first downlink reference signal, an identifier of the first beam, and a TCI state identifier corresponding to the first beam.

14. The method according to any one of claims 11 to 13, before the sending, by a second node, a first message to a first node, the method further comprises:
receiving, by the second node, a fourth message from the first node, wherein the fourth message indicates a downlink transmission power adjustment amount desired by the first node, and the fourth message further indicates a second beam or a second downlink reference signal corresponding to the desired downlink transmission power adjustment amount.

15. The method according to claim 14, wherein the fourth message indicates the second beam by using one or more of the following:
a resource identifier of the second downlink reference signal, an identifier of the second beam, and a TCI state identifier corresponding to the second beam.

16. The method according to claim 11, wherein when the second node is a donor node, the first message comprises downlink reference signal resource configuration information.

17. The method according to claim 16, wherein before the receiving, by the second node, a second message from the first node, the method further comprises:
sending, by the second node, a third message to the first node, wherein the third message indicates the downlink transmission power adjustment amount used by the second node and a corresponding first beam.

18. The method according to any one of claims 11 to 17, wherein the second message further comprises a second measurement result, the second measurement result is determined based on a second ratio, the second measurement result is determined based on the first downlink reference signal, and the second ratio is a power ratio that is between the data and the downlink reference signal and that is used before the downlink transmission power adjustment performed by the second node.

19. A communication apparatus, comprising a functional module for implementing the method according to any one of claims 1 to 10, or a functional module for implementing the method according to any one of claims 11 to 18.

20. A communication apparatus, comprising a processor, wherein the processor is coupled to a memory;
the memory is configured to store computer programs or instructions; and
the processor is configured to execute a part or all of the computer programs or the instructions in the memory, and when the part or all of the computer programs or the instructions are executed, the method according to any one of claims 1 to 10 is implemented, or the method according to any one of claims 11 to 18 is implemented.

21. A communication apparatus, comprising a processor and a memory, wherein
the memory is configured to store computer programs or instructions; and
the processor is configured to execute a part or all of the computer programs or the instructions in the memory, and when the part or all of the computer programs or the instructions are executed, the method according to any one of claims 1 to 10 is implemented, or the method according to any one of claims 11 to 18 is implemented.

22. A chip system, wherein the chip system comprises a processing circuit, and the processing circuit is coupled to a storage medium; and
the processing circuit is configured to execute a part or all of computer programs or instructions in the storage medium, and when the part or all of the computer programs or the instructions are executed, the method according to any one of claims 1 to 10 is implemented, or the method according to any one of claims 11 to 18 is implemented.

23. A computer-readable storage medium, configured to store a computer program, wherein the computer program comprises instructions for implementing the method according to any one of claims 1 to 10, or instructions for implementing the method according to any one of claims 11 to 18.

24. A computer program product, wherein the computer program product comprises computer program code, and when the computer program code is run on a computer, the computer is enabled to perform the method according to any one of claims 1 to 10, or perform the method according to any one of claims 11 to 18.
